# EUROPÄISCHE PATENTSCHRIFT

(11) **EP 2 181 256 B1**
(45) Veröffentlichungstag und Bekanntmachung des Hinweises auf die Patenterteilung: **12.09.2012**
(21) Anmeldenummer: 08784713.3
(22) Anmeldetag: 11.07.2008
(51) Int. Cl.: F01N 3/08, F01N 3/20, F01N 13/02, F01N 13/04, F02D 41/02, F02D 41/00

(54) **VORRICHTUNG UND VERFAHREN ZUR REINIGUNG VON ABGASEN FÜR EINE BRENNKRAFTMASCHINE**
DEVICE AND METHOD FOR PURIFYING EXHAUST GASES FOR AN INTERNAL COMBUSTION ENGINE
DISPOSITIF ET PROCÉDÉ D'ÉPURATION DES GAZ D'ÉCHAPPEMENT D'UN MOTEUR À COMBUSTION INTERNE

(30) Priorität: 22.08.2007 DE 102007039588
(43) Veröffentlichungstag der Anmeldung: 05.05.2010
(73) Patentinhaber: Audi AG, 85045 Ingolstadt (DE)
(72) Erfinder: KOPP, Andre, 74172 Neckarsulm (DE)
(74) Vertreter: Krah, Annette
(86) Internationale Anmeldenummer: PCT/EP2008/005672
(87) Internationale Veröffentlichungsnummer: WO 2009/024215

(56) Entgegenhaltungen:
- EP-A- 0 878 609
- US-A- 6 047 542

## Beschreibung

Die Erfindung betrifft eine Vorrichtung zur Reinigung von Abgasen für eine Brennkraftmaschine eines Kraftfahrzeuges nach dem Oberbegriff des Anspruchs 1 sowie ein Verfahren zur Reinigung von Abgasen für eine Brennkraftmaschine von Kraftfahrzeugen nach dem Oberbegriff des Anspruchs 15.

Aus der gattungsbildenden DE 103 00 298 A1 ist bereits eine Vorrichtung zur Reinigung von Abgasen für einen Abgasstrang einer Brennkraftmaschine bekannt, die einen zweiflutigen Abgasstrang aufweist, wobei jeder Strangabschnitt bzw. Teilabgasstrang jeweils einen NOₓ-Speichkatalysator, einen NO₂-Bildungskatalysator einen SCR-Katalysator und eine Zudosiereinrichtung zur Zudosierung eines Reduktionsmittels aufweist. Mit einem derartigen Aufbau soll sichergestellt werden, das der SCR-Katalysator mit eingespeichertem Ammoniak noch im Abgasstrom abwärts des NOₓ-Speicherkatalysators enthaltene Stickoxide reduzieren kann, wobei gleichzeitig Ammoniak oxidiert wird. Jedem der Katalysatoren ist dabei in jedem der Teilabgasstränge ein separater Sensor zugeordnet. Ein derartiger in der Fig. 5 der DE 103 00 298 A1 dargestellter Aufbau ist sowohl bauteiltechnisch als auch steuerungstechnisch sehr aufwendig und damit teuer in der Herstellung.

Weiter ist aus der DE 698 04 371 T2 eine Abgasreinigungsvorrichtung für eine Brennkraftmaschine bekannt, bei der der Motor mit einem Direktzylindereinspritzventil versehen ist, wobei im Abgasstrang der Brennkraftmaschine ein Ammoniak-Absorptions-Denitrier-Katalysator vorgesehen ist, der Ammoniak aus dem Abgas absorbieren kann. Ferner ist im Abgasstrang auch ein NOₓ-Speicherkatalysator vorgesehen, der NOₓ aus dem Abgas einspeichern kann. Konkret ist hier vorgesehen, mittels des Kraftstoffeinspritzventils Kraftstoff während des Expansions- oder Auslasshubs der Brennkraftmaschine in die jeweils betroffenen Zylinder einzuspritzen, um in dem Abgasstrom eine größere NOₓ-Menge zur Verfügung zu stellen als dies bei einem Abgas mit einer Verbrennung eines fetten Luftkraftstoffverhältnisses der Fall ist. Dieses einen hohen Anteil an NO_{X} aufweisende Abgas wird anschließend zu einem Dreiwegekatalysator oder einem NO_{X}-Speicherkatalysator zugeführt, in dem eine große Menge an Ammoniak erzeugt wird, das anschließend einer Reinigungseinrichtung zugeführt wird, in dem die Stickoxide reduziert und das Ammoniak oxidiert wird. Konkret ist hier jeweils ein Ammoniak-Absorptions-Denitrier-Katalysator als SCR-Katalysator einer NO_{X}-Speicherkatalysator-einrichtung nachgeschaltet, und zwar dergestalt, dass im Falle einer mehrflutigen Ausbildung des Abgasstrangs (Fig. 12, Fig. 23 bis 27) der Abgasstrang im Bereich nach der Brennkraftmaschine zweiflutig ausgebildet ist und in jedem dieser beiden Teilabgasstränge jeweils ein NO_{X}-Speicherkatalysator angeordnet ist. Diese beiden Teilabgasstränge werden dann wieder zu einem einzigem Abgasstrang zusammengeführt, in dem die SCR-Katalysatoreinrichtung in Form des Ammoniak-Absorptions-Denitrier-Katalysator angeordnet ist. Insgesamt handelt es sich hier auf Grund der Einspritzung während des Auslasshubes bzw. der Bauteilvielfalt um einen aufwendigen und komplizierten Aufbau einer Abgasreinigungsvorrichtung.

Aus der US 6,047,542 A ist, insbesondere in Verbindung mit der Ausführungsform der Fig. 43A bis 44B vorgesehen, im Falle eines sogenannten Absorptionsprozesses entsprechend der Fig. 43B im Fettbetrieb der ersten Zylindergruppe in Verbindung mit dem Katalysator Ammoniak zu erzeugen, was dann in den im gleichen Teilabgasstrang angeordneten NH₃-AO-Katalysator eingespeichert wird. Im anderen, mageren Abgasstrang dagegen wird lediglich NO_{X} im Katalysator eingespeichert. Soll dann der Desorptionsvorgang im Sinne der Fig. 44B durchgeführt werden, wird das im Katalysator erzeugte Ammoniak dem NO_{X}-Speicherkatalysator zugeführt, während das aus der zweiten Zylindergruppe austretende magere Abgas dem Katalysator zugeführt wird.

Demgegenüber ist es Aufgabe der vorliegenden Erfindung, eine Vorrichtung und ein Verfahren zur Reinigung von Abgasen für eine Brennkraftmaschine zur Verfügung zu stellen, das eine einfache und funktionssichere sowie bauteiltechnisch günstige Abgasreinigung, insbesondere Stickoxidreduzierung durchführbar ist.

Diese Aufgabe wird bezüglich der Vorrichtung gelöst mit den Merkmalen des Anspruchs 1. Ferner wird diese Aufgabe bezüglich des Verfahrens gelöst mit den Merkmalen des Anspruchs 15. Vorteilhafte Ausgestaltungen hierzu sind jeweils Gegenstand der darauf rückbezogenen Unteransprüche.

Erfindungsgemäß ist vorgesehen, dass die NO_{X}-Speicherkatalysatoreinrichtung und die SCR-Katalysatoreinrichtung so auf unterschiedliche Teilabgasstränge verteilt angeordnet sind, dass bei einem mit Stickoxiden befüllten Stickoxidspeicher der NO_{X}-Speicherkatalysatoreinrichtung für eine vorgegebene Zeitdauer eine vorgegebene Menge eines durch einen unterstöchiometrischen Fettbetrieb der Brennkraftmaschine erzeugten Abgasstroms zur Reduktionsmittelerzeugung, insbesondere zur Ammoniakerzeugung, über die NO_{X}-Speicherkatalysatoreinrichtung zur SCR-Katalysatoreinrichtung strömt, in der das erzeugte Reduktionsmittel, insbesondere Ammoniak, eingespeichert wird.

Damit kann auf einfache Weise in Abhängigkeit von einem befüllten Stickoxidspeicher einer NO_{X}-Speicherkatalysatoreinrichtung für eine vorgegebene Zeitdauer ein unterstöchiometrischer Fettbetrieb vorgegeben werden. Dadurch werden die Stickoxide unter bevorzugt Ammoniakbildung aus dem Stickoxidspeicher freigegeben und wird anschließend eine vorgegebene Abgasmenge, insbesondere die gesamte Abgasmenge, von dem NSC- bzw. NO_{X}-Teilabgasstrang zu dem wenigstens einem SCR-Teilabgasstrang geleitet, um das auf Grund der Anwesenheit des Wasserstoffs im Abgas mit den im Stickoxidspeicher frei werdenden Stickoxidnitraten gebildete Ammoniak als Reduktionsmittel in der jeweiligen SCR-Katalysatoreinrichtung der vorhandenen SCR-Teilabgasstränge einzuspeichern. Dies ermöglicht auf vorteilhafte Weise in Verbindung mit mehrflutigen Abgassträngen von Brennkraftmaschinen eine direkte Erzeugung des Reduktionsmittels, insbesondere des Ammoniaks in der Abgasanlage, so dass die Zudosierung eines Reduktionsmittels bzw. die zusätzliche Einspritzung von Kraftstoff in den Abgasstrom vorteilhaft vermieden werden kann und auf baulich und steuerungstechnisch einfache Weise eine effektive Stickoxidreduzierung möglich wird.

Besonders bevorzugt ist hierbei vorgesehen, einem ersten Teilabgasstrang eine erste Zylindergruppe und einem zweiten Teilabgasstrang eine zweite Zylindergruppe zuzuordnen, wobei in dem einen NSC-Teilabgasstrang ausbildenden ersten Teilabgasstrang lediglich eine NO_{X}-Speicherkatalysatoreinrichtung vorgesehen ist, während in dem einem SCR-Teilabgasstrang ausbildenden zweiten Teilabgasstrang lediglich eine SCR-Katalysatoreinrichtung angeordnet ist. D. h., dass jedem der Teilabgasstränge bevorzugt lediglich eine Art von Katalysator zugeordnet ist, die durch optimierte Steuerung des Abgasstroms mittels einfacher und funktionssicherer Strömungsleitelemente eine effektive Stickoxidreduzierung unter gleichzeitiger Erzeugung des Reduktionsmittels im Abgasstrom selbst ermöglichen:

So werden die eben angesprochenen Strömungsleitelemente beispielsweise mittels einer Steuereinrichtung der Motorsteuereinrichtung so angesteuert, dass im Falle eines durch einen Magerbetrieb der Brennkraftmaschine gefüllten Stickoxidspeichers der NO_{X}-Speicherkatalysatoreinrichtung eine stromab der NO_{X}-Speicherkatalysatoreinrichtung und stromauf der SCR-Katalysatoreinrichtung vorgesehen Strömungsverbindung zwischen dem NSC und dem SCR-Teilabgasstrang so freigegeben wird, dass bei gleichzeitigem unterstöchiometrischen Fettbetrieb der dem NSC-Teilabgasstrang zugeordneten ersten Zylindergruppe eine vorgegebene Abgasmenge des dort gebildeten Abgases, bevorzugt das gesamte dort gebildete Abgas, unter Reduktions- bzw. Ammoniakbildung mit dem Stickoxid der NO_{X}-Speicherkatalysatorseinrichtung zur SCR-Katalysatoreinrichtung strömt, in der das gebildete Reduktionsmittel eingespeichert wird. In Verbindung mit einem derartigen zweiflutigen Abgassystem kann somit lediglich durch eine einzige Betriebsarten-Umschaltung einer Zylindergruppe eine Reduktionsmittelerzeugung ohne zusätzliche Eindüsung eines Reduktionsmittels in den Abgasstrom erfolgen.

Besonders bevorzugt ist hierbei vorgesehen, dass die Strömungsleiteinrichtung während des unterstöchiometrischen Fettbetriebs der ersten Gruppe von Zylindern den NSC-Teilabgasstrang stromab der Strömungsverbindung zum SCR-Teilabgasstrang sperrt, so dass die gesamte in der ersten Zylindergruppe gebildete Abgasmenge über die Strömungsverbindung in den SCR-Teilabgasstrang überströmt. Damit wird eine besonders effektive und mengenmäßig hohe Ammoniakeinspeicherung in der SCR-Katalysatoreinrichtung möglich.

Wie ebenfalls eben geschildert, wird bevorzugt die dem SCR-Teilabgasstrang zugeordnete zweite Gruppe von Zylindern während des unterstöchiometrischen Fettbetriebs der dem NSC-Teilabgasstrang zugeordneten ersten Zylindergruppe bevorzugt weiterhin im Magerbetrieb betrieben, wodurch sich eine vorteilhafte Kraftstoffreduzierung für den Betrieb des Verbrennungsmotors erzielen lässt bzw. sich je nach Fahrerwunsch die Momentenbildung des Verbrennungsmotors beeinflussen lässt. Die zweite Zylinderbank kann hierbei z. B. ganz normal dem Fahrerwunsch (Gaspedalstellung) folgen.

Die Strömungsleiteinrichtung ist bevorzugt weiter so ausgelegt, dass während des Magerbetriebs der ersten Zylindergruppe, d. h. während des Magerbetriebs der Brennkraftmaschine, die Strömungsverbindung zwischen dem NSC-Teilabgasstrang und SCR-Teilabgasstrang gesperrt ist, so dass die beiden Teilabgasströme des zweiflutigen Abgassystems jeweils über ihre jeweiligen Stränge abströmen können.

Die zweiflutige Ausgestaltung des Abgassystems ist hier die bevorzugte Ausgestaltung, bei der die SCR-Katalysatoreinrichtung dem einen und die NO_{X}-Speicherkatalysatoreinrichtung dem anderen, zweiten Teilabgasstrang zugeordnet ist. Grundsätzlich könnte es sich hier jedoch auch um ein solches mehrflutiges Abgassystem handeln, bei dem gegebenenfalls noch weitere Teilabgasstränge vorgesehen sind. In diesem Fall ist dann ebenfalls im erfindungsgemäßen Sinne stets jeweils ein NSC-Teilabgasstrang mit wenigstens einem SCR-Teilabgasstrang so parallel geschalten und über eine Strömungsverbindung verbindbar, dass die erfindungsgemäße Reduktionsmittelerzeugung im Abgassystem selbst in Verbindung mit lediglich einer Betriebsarten-Umstaltung der Brennkraftmaschine, insbesondere einer Zylindergruppe der Brennkraftmaschine, für eine effektive Stickoxidreduzierung erfolgen kann.

Nachfolgend wird die Erfindung aus Verständnisgründen stets in Verbindung mit dem bevorzugten zweiflutigen Abgasstrangsystem näher erläutert, wie dies auch bereits zuvor zur besseren Herausarbeitung der erfindungsgemäßen Vorteile erfolgt ist.

Die Strömungsverbindung zwischen den beiden Teilabgassträngen erfolgt bevorzugt durch ein Überströmrohr, insbesondere einen sogenannten Übersprecher, der stromab der NO_{X}-Speicherkatalysatoreinrichtung in den NSC-Teilabgasstrang und stromauf der SCR-Katalysatoreinrichtung in den SCR-Teilabgasstrang mündet.

Die Strömungsleiteinrichtung ist bevorzugt durch eine Abgasklappenanordnung bzw. eine Ventilanordnung gebildet.

Diese Ausgestaltung der Strömungsverbindung und der Strömungsleiteinrichtung ist bauteiltechnisch einfach beherrschbar und weist eine hohe Funktionssicherheit für den Betrieb der Abgasreinigungsvorrichtung auf.

Gemäß einer ersten konkreten Ausgestaltung kann die Strömungsleiteinrichtung durch eine Abgasklappenanordnung mit zwei mittels der Steuereinrichtung entsprechend vorgegebener Steuerungsparameter ansteuerbarer Abgasklappen gebildet sein, von denen eine erste Abgasklappe das Überströmrohr freigibt oder verschließt, während eine zweite Abgasklappe stromab des Überstromrohrs im NSC-Teilabgasstrang angeordnet ist, um diesen entsprechend freizugeben oder zu verschließen.

Alternativ dazu kann die Strömungsleiteinrichtung aber auch durch ein im Mündungsbereich des Überströmrohrs im NSC-Teilabgasstrang angeordnetes Wegeventil, insbesondere ein 2-Wege-Ventil, gebildet sein, das in einer ersten Schaltstellung die Strömungsverbindung zum Überströmrohr bei gleichzeitiger Freigabe der Strömung im NSC-Teilabgasstrang sperrt oder das in einer zweiten Schaltstellung die Strömungsverbindung zum Überströmrohr bei gleichzeitiger Sperrung der Weiterströmung im SCR-Teilabgasstrang freigibt. Gemäß einer weiteren besonders bevorzugten Ausgestaltung der Erfindung ist die erste Zylindergruppe durch eine erste Zylinderbank und die zweite Zylindergruppe durch eine zweite Zylinderbank einer insbesondere in V-Bauweise, z. B. V6-, V8-, V10-, V12-Bauweise ausgebildeten Brennkraftmaschine gebildet. D. h., dass hier dann eine Ammoniakerzeugung ohne Eindüsung eines zweiten Betriebsstoffes bei Verwendung eines zweiflutigen Abgasstrangsystems möglich ist, bei dem lediglich eine der Zylinderbänke eine Betriebsarten-Umschaltung erfährt. Insbesondere in Verbindung mit derartigen V-Motoren ist die erfindungsgemäße Lehre besonders vorteilhaft.

Die NO_{X}-Speicherkatalysatoreinrichtung ist ebenso wie die SCR-Katalysatoreinrichtung bevorzugt durch einen einzigen NO_{X}-Speicherkatalystor bzw. SCR-Katalysator gebildet. Je nach Ausgestaltung der Brennkraftmaschine kann es jedoch auch erforderlich sein, gegebenenfalls mehrere derartiger NO_{X}-Speicherkatalysatoren bzw. SCR-Katalysatoren in den jeweils zugeordneten Abgassträngen hintereinander zu schalten, gegebenenfalls in Kombination mit einem Partikelfilter, was insbesondere für Diesel-Brennkraftmaschinen erforderlich sein kann. Grundsätzlich besteht jedoch mit der erfindungsgemäßen Aufteilung unterschiedlicher Katalysatorarten auf unterschiedliche Teilabgasstränge eines Abgassystems einer Brennkraftmaschine der Vorteil gerade darin, dass hier durch eine entsprechende Steuerung der Abgasströme unter gleichzeitiger Reduktionsmittelerzeugung eine effektive Stickoxidreduzierung mit einer geringeren Anzahl von Katalysatoren erzielt werden kann, d. h. in den einzelnen Teilabgassträngen gerade keine zwei unterschiedlichen Katalysatorarten (bezüglich NO_{X}- und SCR-Katalysatoren) angeordnet werden müssen, wie dies bei der Ausführungsform der Fig. 5 der DE 103 00 298 A1 der Fall ist. Ebenso kann hierdurch, wie dies bei der DE 698 04 371 T2 der Fall ist, ein sehr groß dimensionierter SCR-Katalysator im wieder zusammengeführten einzigen Abgasstrang vermieden werden. D. h., dass mit der erfindungsgemäßen Lehre eine besonders bauteiltechnisch günstige Anordnung mit wenigen Katalysatoren vorgesehen werden kann, was die Herstellungskosten und die Fehleranfälligkeiten bzw. Reparaturnotwendigkeiten deutlich reduziert.

Das Umschaltkriterium zwischen den einzelnen Betriebsbereichen wird bevorzugt mittels einer Sensoreinrichtung ermittelt, wobei hier grundsätzlich jeder Katalysatoreinrichtung in jedem Teilabgasstrang eine Sensoreinrichtung nachgeschaltet sein kann, um entsprechende Durchbrüche eines vorgegebenen Schadstoffes, z. B. NO_{X}, zu ermitteln und dann entsprechend den Umschaltbetrieb einzuleiten. Grundsätzlich ist es jedoch ausreichend, z. B. lediglich im NSC-Teilabgasstrang eine Sensoreinrichtung nach der NO_{X}-Speicherkatalysatoreinrichtung vorzusehen, da ein Stickoxiddurchbruch dort einen gefüllten NO_{X}-Speicher anzeigt, so dass dann das Umschaltkriterium für die Reduktionsmittelerzeugung unter gleichzeitiger Stickoxidausspeicherung aus dem Stickoxid-Speicherkatalysator vorgegeben ist. Über die gleiche Sensoreinrichtung kann dann auch das Ende dieser kurzzeitigen unterstöchiometrischen Fettbetriebsweise zur Reduktionsmittelerzeugung ermittelt werden, in dem ebenfalls wiederum über die Stickoxidkonzentration im Abgasstrom sensiert werden kann, dass keine Stickoxide mehr zur Ammoniakbildung vorhanden sind, z. B. über die Querempfindlichkeit von NOₓ-Sonden zu NH₃ oder aber auch über das Lambdasignal der ersten Pumpzelle im Sensor. Analog ist dies auch auf der Seite des SCR-Teilabgasstrangs mittels einer der SCR-Katalysatoreinrichtung nachgeschalteten Sensoreinrichtung möglich, und zwar hier bezüglich des Ammoniaks als sensierten Abgasparameter.

Die Erfindung wird nachfolgend anhand einer Zeichnung näher erläutert.

Es zeigen:
- Fig. 1: eine erste Ausführungsform der vorliegenden Erfindung im Magerbetrieb der Brennkraftmaschine,
- Fig. 2: die Ausführungsform gemäß Fig. 1 im Reduktionsmittelbetrieb,
- Fig. 3: eine alternative, zweite Ausführungsform der vorliegenden Erfindung im Magerbetrieb der Brennkraftmaschine, und
- Fig. 4: die Ausführungsform gemäß Fig. 3 im Reduktionsmittelbetrieb.

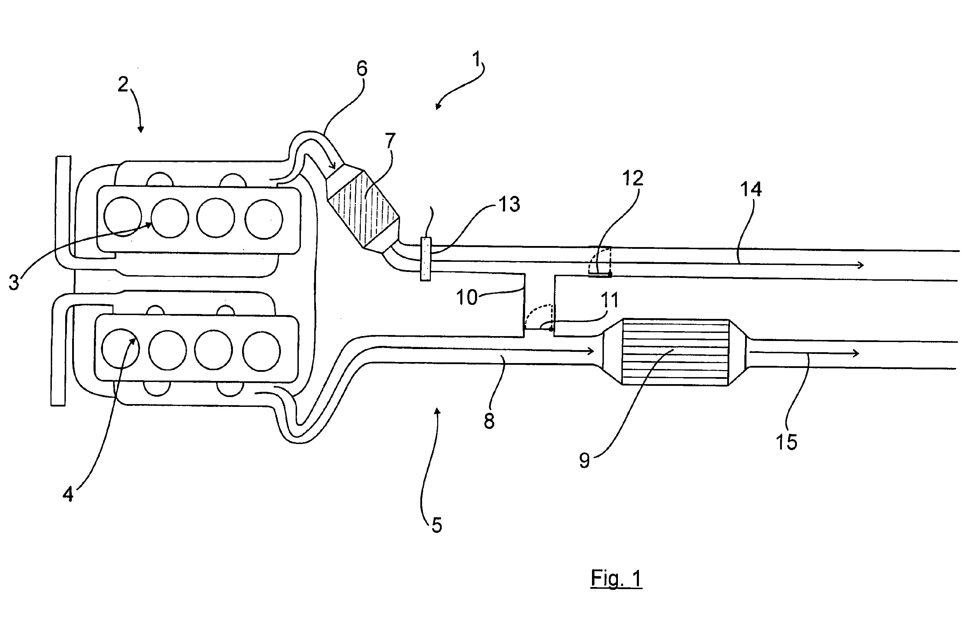

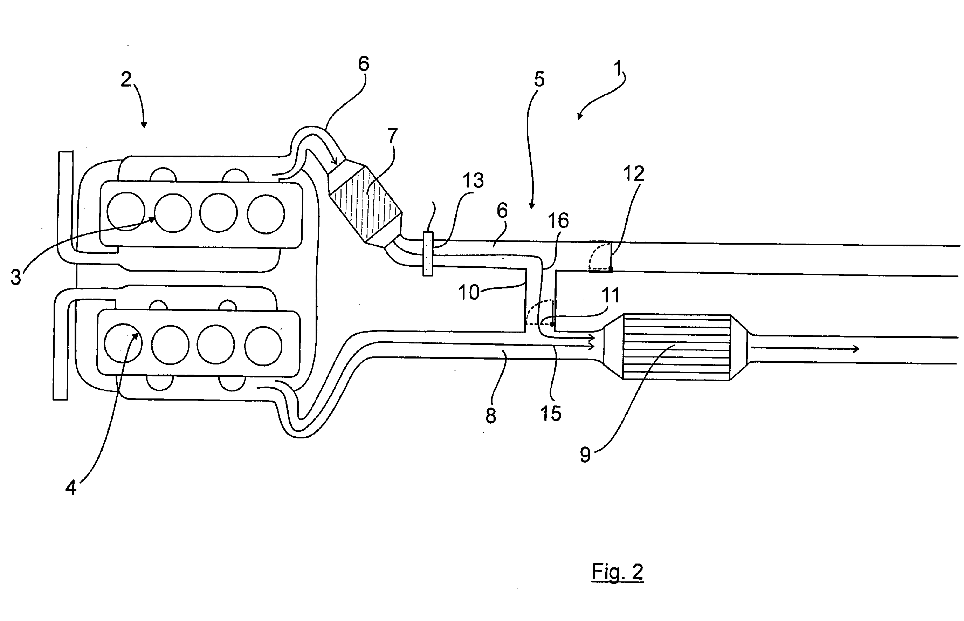

In Fig. 1 und 2 ist ein erster erfindungsgemäßer Aufbau einer Abgasreinigungsvorrichtung 1 gezeigt, mit einer Brennkraftmaschine 2, die hier als V8-Verbrennungsmotor mit einer ersten Zylinderbank 3 und einer zweiten Zylinderbank 4 ausgebildet ist.

An diese Brennkraftmaschine 2 schließt sich ein zweiflutig ausgebildeter Abgasstrang 5 an, der einen einen NO_{X}-Speicherkatalysator 7 aufweisenden ersten Teilabgasstrang als NSC-Teilabgasstrang 6 und einen einen SCR-Katalysator 9 aufweisenden zweiten Teilabgasstrang als SCR-Teilabgasstrang 8 aufweist.

Der NSC-Teilabgasstrang 6 ist hier der ersten Zylinderbank 3 zugeordnet, während der SCR-Teilabgasstrang 8 der zweiten Zylinderbank 4 zugeordnet ist.

Von den beiden Zylinderbänken 3, 4 ausgehend verlaufen die beiden Teilabgasstränge 6, 8 im Wesentlichen parallel zueinander, wobei in einem Bereich stromab des NO_{X}-Speicherkatalysatros 7 ein Überströmrohr als Übersprecher 10 vorgesehen ist, der stromauf des SCR-Katalysators in den SCR-Teilabgasstrang mündet.

Wie dies der Fig. 1 weiter entnommen werden kann, ist im Bereich des Übersprechers 10 eine hier lediglich schematisch dargestellte erste Abgasklappe 11 vorgesehen, während stromab des Mündungsbereichs des Übersprechers 10 im NO_{X}-Teilabgasstrang 6 eine zweite Abgasklappe 12 vorgesehen ist. Diese beiden Abgasklappen 11, 12 sind mittels einer hier nicht dargestellten Steuereinrichtung gekoppelt, die die beiden Abgasklappen zwischen deren Strömungs-Freigabestellung und deren Strömungs-Sperrstellung entsprechend vorgegebener Steuerungsparameter ansteuert. Die Steuerungsparameter werden in Abhängigkeit von dem Betrieb der Brennkraftmaschine 2 vorgegeben, wie dies nachfolgend noch näher erläutert wird.

Ferner ist dem NO_{X}-Speicherkatalysator 7 ein NO_{X}-Sensor 13 nachgeschaltet, mittels dem der Stickoxidanteil im Abgasstrom signaltechnisch erfasst und in einer zugeordneten Steuereinrichtung ausgewertet werden kann.

Die Funktionsweise dieser Abgasreinigungsvorrichtung 1 ist wie folgt:

Im Magerbetrieb der Brennkraftmaschine werden die beiden Teilabgasstränge 6, 8 mit einem mageren Abgasgemisch beaufschlagt, das in Form der hier lediglich schematisch eingezeichneten Teilabgasströme 14, 15 durch die beiden Teilabgasstränge 6, 8 abgeführt wird. In diesem Magerbetrieb werden in dem NO_{X}-Speicherkatalysator 7 die Stickoxide eingespeichert, wodurch diese im ersten Teilabgasstrom 14 reduziert werden, während im SCR-Katalysator 9 unter Verbrauch von Ammoniak als darin gespeichertes Reduktionsmittel ebenfalls eine Stickoxid-Reduzierung im zweiten Teilabgasstrom erfolgt. Wie dies in der Fig. 1 schematisch dargestellt ist, befindet sich bei diesem Magerbetrieb die erste Abgasklappe 11 in der Geschlossenstellung, während sich die zweite Abgasklappe 12 in der Freigabestellung befindet. Dadurch ist der Strömungsweg für den ersten Teilabgasstrom 14 entlang des NSC-Teilabgasstrang 6 freigegeben, während der Übersprecher 10 abgesperrt ist, so dass keine Vermischung der beiden Teilabgasströme 14, 15 erfolgen kann.

Wird nun mittels des NO_{X}-Sensors 13 z. B. festgestellt, dass keine weitere Stickoxideinspeicherung im NO_{X}-Speicherkatalysator 7 möglich ist, d. h. der wenigstens eine Stickoxidspeicher des NO_{X}-Speicherkatalysators 7 voll gefüllt ist, dann erfolgt eine Umschaltung der Betriebsweise der ersten Zylinderbank 3 auf einen unterstöchiometrischen Fettbetrieb, während der Magerbetrieb für die zweite Zylinderbank 4 weiterhin beibehalten wird. Weiterhin erfolgt gleichzeitig eine Umschaltung der beiden Abgasklappen 11, 12 in die in der Fig. 2 gezeigten Stellungen, d. h. dass die erste Abgasklappe 11 sich in einer Freigabestellung befindet und die Strömungsverbindung mittels des Übersprechers 10 zwischen den beiden Teilabgassträngen 6, 8 freigibt, während die zweite Abgasklappe 12 nunmehr den NSC-Teilabgasstrang 6 im Bereich stromab des Übersprechers 10 absperrt.

Auf Grund des unterstöchiometrischen Betriebs der ersten Zylinderbank wird das in den NO_{X}-Speicherkatalysator 7, insbesondere als Nitrate eingespeicherte Stickoxid, frei und reagiert mit dem Wasserstoff im Abgas zu Ammoniak, das dann mittels des ersten Teilabgasstroms 16 über den Übersprecher 10 ebenso wie der zweite Teilabgasstrom 15 zum und über den SCR-Katalysator 9 strömt, in dem das Ammoniak als Reduktionsmittel für die Stickoxide eingespeichert wird.

Nachdem mittels des NO_{X}-Sensor 13 wiederum ermittelt worden ist, dass der Anteil der Stickoxide im ersten Teilabgasstrom 16 im Bereich nach dem NO_{X}-Speicherkatalysator 7 so gering ist, dass davon ausgegangen werden kann, dass der Stickoxidspeicher des NO_{X}-Speicherkatalysators 7 entleert ist, erfolgt wiederum eine erneute Betriebsarten-Umschaltung der ersten Zylinderbank 3, die dann wiederum im Magerbetrieb betrieben wird. Gleichzeitig erfolgt wiederum auch eine Umschaltung der beiden Abgasklappen 11, 12, so dass der in Verbindung mit der Fig. 1 ausführlich erläuterte Zustand wieder vorliegt.

Diese Vorgänge wiederholen sich entsprechend zyklisch und führen dazu, dass Ammoniak im Abgassystem ohne zusätzliche Eindüsung eines Kraft- bzw. Betriebsstoffes erzeugt werden kann, in dem in Verbindung mit einem zweiten Abgasstrang 5 lediglich die erste Zylinderbank 3 von der Betriebsart her umgeschalten wird. D. h., dass lediglich für eine kurze Zeitspanne eine der Zylinderbänke 3, 4, nämlich die im Beispielfall erste Zylinderbank 3 auf die unterstöchiometrische Fettbetriebsart umgestellt werden braucht, nicht dagegen die zweite Zylinderbank 4, wodurch sich insgesamt erhebliches Kraftstoffeinsparpotential ergibt und zusätzlich einem ggf. angeforderten Momentenwunsch seitens des Fahrers gefolgt werden kann.

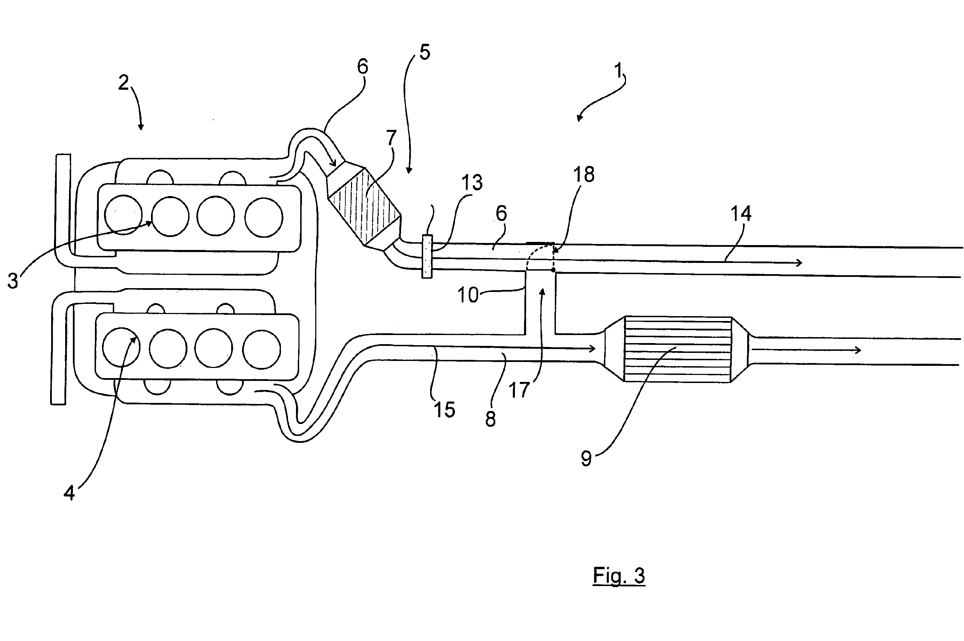

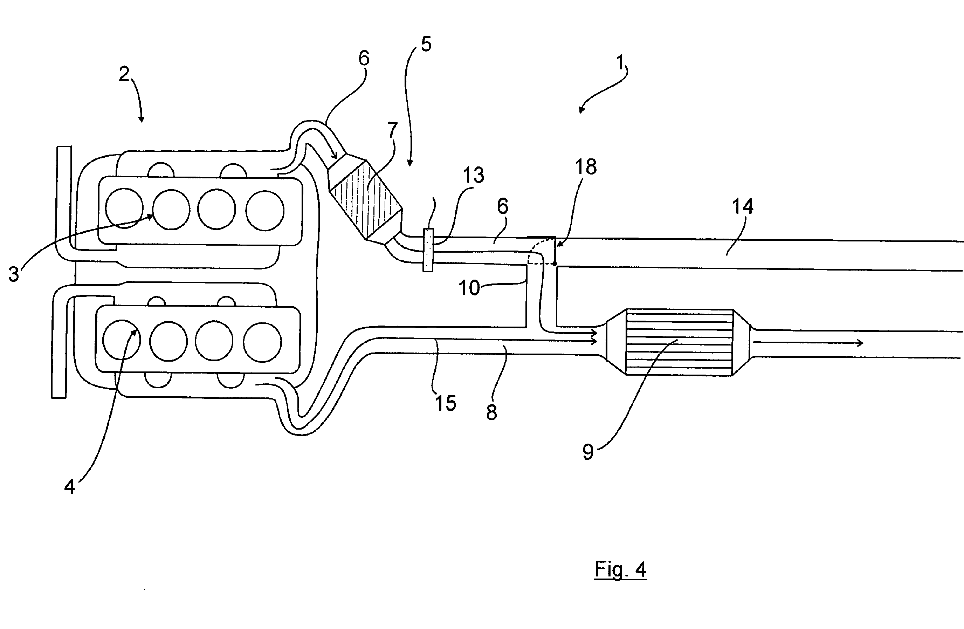

Die in der Fig. 3 und 4 dargestellte Ausführungsform der Abgasreinigungsvorrichtung 1 unterscheidet sich von derjenigen der Fig. 1 und 2 lediglich dadurch, dass anstelle der beiden Abgasklappen 11, 12 im Mündungsbereich 17 des Übersprechers 10 im NSC-Teilabgasstrang ein 2-Wege-Ventil vorgesehen ist, das in der in der Fig. 3 dargestellten Magerbetriebsphase den Übersprecher 10 sperrt und den NSC-Teilabgasstrang 6 für eine Strömung freigibt. In der in der Fig. 4 dargestellten Regenerationsmittelerzeugungsphase, bei der die erste Zylinderbank 3 unterstöchiometrisch betrieben wird, ist die Strömungsverbindung zum Übersprecher 10 freigegeben und der NSC-Teilabgasstrang 6 stromab des Mündungsbereichs gesperrt. Ansonsten entspricht diese Ausführungsform vom Aufbau und von der Funktionsweise her identisch derjenigen, wie sie in Verbindung mit den Fig. 1 und 2 bereits erläutert worden ist.

## Patentansprüche

1. Vorrichtung zur Reinigung von Abgasen für eine Brennkraftmaschine, mit einem mehrere Teilabgasstränge aufweisenden mehrflutigen Abgasstrangsystem, in dem eine NO_{X}-Speicherkatalysatoreinrichtung und eine SCR-Katalysatoreinrichtung angeordnet sind,
**dadurch gekennzeichnet,**
**dass** die NO_{X}-Speicherkatalysatoreinrichtung (7) und die SCR-Katalysatoreinrichtung (9) so auf unterschiedliche Teilabgasstränge (6, 8) verteilt angeordnet sind, dass bei einem mit Stickoxiden befüllten Stickoxidspeicher der NO_{X}-Speicherkatalysatoreinrichtung (7) eine vorgegebene Menge eines durch einen unterstöchiometrischen Fettbetrieb der Brennkraftmaschine (2) erzeugten Abgasstroms (16) zur Reduktionsmittelerzeugung, insbesondere Ammoniakerzeugung, über die NO_{X}-Speicherkatalysatoreinrichtung (7) zur SCR-Katalysatoreinrichtung (9) strömt, in der das erzeugte Reduktionsmittel, insbesondere Ammoniak, einspeicherbar ist.

2. Vorrichtung nach Anspruch 1, **dadurch gekennzeichnet,**
**dass** ein einer ersten Gruppe (3) von Zylindern der Brennkraftmaschine (2) zugeordneter erster Teilabgasstrang (6) und ein einer zweiten Gruppe (4) von Zylindern der Brennkraftmaschine (2) zugeordneter zweiter Teilabgasstrang (8) vorgesehen ist, und
**dass** in dem einen NSC-Teilabgasstrang ausbildenden ersten Teilabgasstrang (6) eine, NO_{X}-Speicherkatalysatoreinrichtung (7) und in dem einen SCR-Teilabgasstrang ausbildenden zweiten Teilabgasstrang (8) eine, SCR-Speicherkatalysatoreinrichtung (9) angeordnet ist.

3. Vorrichtung nach Anspruch 2, **dadurch gekennzeichnet**, das eine mittels einer Steuereinrichtung ansteuerbare Strömungsleiteinrichtung (11, 12; 18) vorgesehen ist, die im Falle eines durch einen Magerbetrieb der Brennkraftmaschine (2) gefüllten Stickoxidspeichers der NO_{X}-Speicherkatalysatoreinrichtung (7) eine stromab der NO_{X}-Speicherkatalysatoreinrichtung (7) und stromauf der SCR-Katalysatoreinrichtung (9) vorgesehene Strömungsverbindung zwischen dem NSC- und dem SCR-Teilabgasstrang (6, 8) so freigibt, dass bei gleichzeitigem unterstöchiometrischem Fettbetrieb der dem NSC-Teilabgasstrang (6) zugeordneten ersten Gruppe (3) von Zylindern eine vorgegebene Abgasmenge (16) des dort gebildeten Abgases unter Reduktionsmittelbildung mit dem Stickoxid der NO_{X}-Speicherkatalysatoreinrichtung (7) zur SCR-Katalysatoreinrichtung (9) strömt zur Einspeicherung des gebildeten Reduktionsmittels, insbesondere von Ammoniak, in der SCR-Katalysatoreinrichtung (9).

4. Vorrichtung nach Anspruch 3, **dadurch gekennzeichnet, dass** die Strömungsleiteinrichtung (11,12; 18) während des unterstöchiometrischen Fettbetriebs der ersten Gruppe (3) von Zylindern den NO_{X}-Teilabgasstrang (6) stromauf der Strömungsverbindung (10) zum SCR-Teilabgasstrang (8) sperrt dergestalt, dass die gesamte, in der ersten Gruppe von Zylindern gebildete Abgasmenge (16) über die Strömungsverbindung (10) in den SCR-Teilabgasstrang (8) überströmt.

5. Vorrichtung nach Anspruch 3 oder Anspruch 4, **dadurch gekennzeichnet, dass** die dem SCR-Teilabgasstrang (8) zugeordnete zweite Gruppe (4) von Zylindern während des unterstöchiometrischen Fettbetriebs der dem NSC-Teilabgasstrang (6) zugeordneten ersten Zylindergruppe (3) im Magerbetrieb betreibbar ist.

6. Vorrichtung nach einem der Ansprüche 3 bis 5, **dadurch gekennzeichnet, dass** die Strömungsleiteinrichtung (11, 12; 18) während des Magerbetriebs der ersten Zylindergruppe (3), insbesondere während des Magerbetriebs der Brennkraftmaschine (2), die Strömungsverbindung (10) zwischen dem NO_{X}-Teilabgasstrang (6) und dem SCR-Teilabgasstrang (8) sperrt und die Strömung jeweils im NSC-Teilabgasstrang (6) und im SCR-Teilabgasstrang (8) freigibt.

7. Vorrichtung nach einem der Ansprüche 1 bis 6, **dadurch gekennzeichnet, dass** die Strömungsverbindung (11, 12; 18) durch ein Überströmrohr (10), insbesondere einen Übersprecher, gebildet ist, der stromab der NO_{X}-Speicherkatalysatoreinrichtung (7) in den NO_{X}-Teilabgasstrang (6) und stromauf der SCR-Katalysatoreinrichtung (9) in den SCR-Teilabgasstrang (8) mündet.

8. Vorrichtung nach einem der Ansprüche 1 bis 7, **dadurch gekennzeichnet, dass** die Strömungsleiteinrichtung durch eine Abgasklappenanordnung (11, 12) und/oder eine Ventilanordnung (18) gebildet ist.

9. Vorrichtung nach Anspruch 7 und Anspruch 8, **dadurch gekennzeichnet,**
**dass** die Strömungsleiteinrichtung durch eine Abgasklappenanordnung mit zwei mittels der Steuereinrichtung entsprechend vorgegebener Steuerungsparameter ansteuerbarer Abgasklappen (11, 12) gebildet ist, von denen eine erste Abgasklappe (11) das Überströmrohr (10) freigibt oder verschließt, während eine zweite Abgasklappe (12) stromab des Überströmrohrs (10) im NSC-Teilabgasstrang (6) angeordnet ist und diesen freigibt oder verschließt.

10. Vorrichtung nach Anspruch 7 und Anspruch 8, **dadurch gekennzeichnet, dass** die Strömungsleiteinrichtung durch ein im Mündungsbereich (17) des Überströmrohrs (10) im NO_{X}-Teilabgasstrang (6) angeordnetes Wegeventil (18), insbesondere 2-Wegeventil, gebildet ist, das in einer ersten Schaltstellung die Strömungsverbindung zum Überströmrohr (10) bei gleichzeitiger Freigabe der Strömung im NSC-Teilabgasstrang (6) sperrt oder das in einer zweiten Schaltstellung die Strömungsverbindung zum Überströmrohr (10) bei gleichzeitiger Sperrung der Weiterströmung im SCR-Teilabgasstrang (8) freigibt.

11. Vorrichtung nach einem der Ansprüche 2 bis 10, **dadurch gekennzeichnet, dass** die erste Zylindergruppe durch eine erste Zylinderbank (3) und die zweite Zylindergruppe durch eine zweite Zylinderbank (4) der Brennkraftmaschine (2) insbesondere einer Brennkraftmaschine in V-Bauweise gebildet ist.

12. Vorrichtung nach einem der Ansprüche 1 bis 11, **dadurch gekennzeichnet, dass** die NO_{X}-Speicherkatalysatoreinrichtung (7) durch wenigstens einen NO_{X}-Speicherkatalysator gegebenenfalls in Kombination mit einem Partikelfilter gebildet ist.

13. Vorrichtung nach einem der Ansprüche 1 bis 12, **dadurch gekennzeichnet, dass** die SCR-Katalysatoreinrichtung (9) durch wenigstens einen SCR-Katalysator, insbesondere einen SCR-Katalysator auf Zeolithbasis, gegebenenfalls in Kombination mit einem Partikelfilter gebildet ist.

14. Vorrichtung nach einem der Ansprüche 1 bis 13, **dadurch gekennzeichnet, dass** stromab der NO_{X}-Speicherkatalysatoreinrichtung (7) und/oder stromab der SCR-Katalysatoreinrichtung (9) eine Sensoreinrichtung (13) vorgesehen ist, mittels der bzw. denen vorgegebene Abgasparameter, insbesondere eine Schadstoffkonzentration, im Abgas erfassbar ist bzw. sind, so dass in Abhängigkeit von den erfassten Parametern, insbesondere durch Vergleich mit vorgegebenen Schwellwerten, ein Umschalten zwischen den einzelnen Betriebsweisen der Brennkraftmaschine (2), insbesondere eine Betriebsarten-Umschaltung für vorgegebene Zylindergruppen bzw. Zylinderbänke (3), durchführbar ist.

15. Verfahren zur Reinigung von Abgasen für eine Brennkraftmaschine, mit einem mehrere Teilabgasstränge aufweisenden mehrflutigen Abgasstrang, in dem eine NO_{X}-Speicherkatalysatoreinrichtung und eine SCR-Katalysatoreinrichtung angeordnet sind,
**dadurch gekennzeichnet,**
**dass** die NO_{X}-Speicherkatalysatoreinrichtung (7) und die SCR-Katalysatoreinrichtung (9) so auf unterschiedliche Teilabgasstränge (6, 8) verteilt angeordnet sind, dass bei einem mit Stickoxiden befüllten Stickoxidspeicher der NO_{X}-Speicherkatalysatoreinrichtung (7) eine vorgegebene Menge eines durch einen unterstöchiometrischen Fettbetrieb der Brennkraftmaschine (2) erzeugten Abgasstroms (16) zur Reduktionsmittelerzeugung, insbesondere Ammoniakerzeugung, über die NO_{X}-Speicherkatalysatoreinrichtung (7) zur SCR-Katalysatoreinrichtung (9) strömt, in der das erzeugte Reduktionsmittel, insbesondere Ammoniak, eingespeichert wird.

16. Verfahren nach Anspruch 15, **dadurch gekennzeichnet,**
**dass** ein einer ersten Gruppe (3) von Zylindern der Brennkraftmaschine (2) zugeordneter erster Teilabgasstrang (6) und ein einer zweiten Gruppe (4) von Zylindern der Brennkraftmaschine (2) zugeordneter zweiter Teilabgasstrang (8) vorgesehen ist, und
**dass** in dem einen NO_{X}-Teilabgasstrang ausbildenden ersten Teilabgasstrang (6) eine, NO_{X}-Speicherkatalysatoreinrichtung (7) und in dem einen SCR-Teilabgasstrang ausbildenden zweiten Teilabgasstrang (8) eine, SCR-Speicherkatalysatoreinrichtung (9) angeordnet ist.

17. Verfahren nach Anspruch 16, **dadurch gekennzeichnet, dass** eine mittels einer Steuereinrichtung ansteuerbare Strömungsleiteinrichtung (11, 12; 18) vorgesehen ist, die im Falle eines durch einen Magerbetrieb der Brennkraftmaschine (12) gefüllten Stickoxidspeichers der NO_{X}-Speicherkatalysatoreinrichtung (7) eine stromab der NO_{X}-Speicherkatalysatoreinrichtung (7) und stromauf der SCR-Katalysatoreinrichtung (9) vorgesehene Strömungsverbindung zwischen dem NO_{X}- und dem SCR-Teilabgasstrang (6, 8) so freigibt, dass bei gleichzeitigem unterströchiometrischem Fettbetrieb der dem NSC-Teilabgasstrang (6) zugeordneten ersten Gruppe (3) von Zylindern eine vorgegebene Abgasmenge (16) des dort gebildeten Abgases unter Reduktionsmittelbildung mit dem freigegebenen Stickoxid der NO_{X}-Speicherkatalysatoreinrichtung (7) zur SCR-Katalysatoreinrichtung (9) strömt, in der das erzeugte Reduktionsmittel, insbesondere Ammoniak eingespeichert wird.

18. Verfahren nach Anspruch 17, **dadurch gekennzeichnet, dass** die Strömungsleiteinrichtung (11,12; 18) während des unterstöchiometrischen Fettbetriebs der ersten Gruppe (3) von Zylindern den NSC-Teilabgasstrang (6) stromab der Strömungsverbindung (10) zum SCR-Teilabgasstrang (8) sperrt, dergestalt, dass die gesamte, in der ersten Gruppe von Zylindern gebildete Abgasmenge (16) über die Strömungsverbindung (10) in den SCR-Teilabgasstrang (8) überströmt.

19. Verfahren nach Anspruch 17 oder Anspruch 18, **dadurch gekennzeichnet, dass** die dem SCR-Teilabgasstrang (8) zugeordnete zweite Gruppe (4) von Zylindern während des unterstöchiometrischen Fettbetriebs der dem NO_{X}-Teilabgasstrang (6) zugeordneten ersten Zylindergruppe (3) im Magerbetrieb betrieben wird.

20. Verfahren nach einem der Ansprüche 17 bis 19, **dadurch gekennzeichnet, dass** die Strömungsleiteinrichtung (11, 12; 18) während des Magerbetriebs der ersten Zylindergruppe (3), insbesondere während des Magerbetriebs der Brennkraftmaschine (2), die Strömungsverbindung (10) zwischen dem NSC-Teilabgasstrang (6) und dem SCR-Teilabgasstrang (8) sperrt und die Strömung jeweils im NSC-Teilabgasstrang (6) und im SCR-Teilabgasstrang (8) freigibt.

21. Verfahren nach einem der Ansprüche 15 bis 20, **dadurch gekennzeichnet, dass** stromab der NO_{X}-Speicherkatalysatoreinrichtung (7) und/oder stromab der SCR-Katalysatoreinrichtung (9) eine Sensoreinrichtung (13) vorgesehen ist, mittels der bzw. denen vorgegebene Abgasparameter, insbesondere eine Schadstoffkonzentration, im Abgas erfasst werden, so dass in Abhängigkeit von den erfassten Parametern, insbesondere durch Vergleich mit vorgegebenen Schwellwerten, ein Umschalten zwischen den einzelnen Betriebsweisen der Brennkraftmaschine (2), insbesondere eine Betriebsarten-Umschaltung für vorgegebene Zylindergruppen bzw. Zylinderbänke (3), durchführbar ist.

## Claims

1. Device for purifying exhaust gases for an internal combustion engine, comprising a multi-flow exhaust gas line system which has a plurality of partial exhaust gas lines and in which an NOₓ storage catalytic converter means and an SCR catalytic converter means are arranged, **characterised in that** the NOₓ storage catalytic converter means (7) and the SCR catalytic converter means (9) are distributed on different partial exhaust gas lines (6, 8) such that, in the case of a nitrogen-oxide-filled nitrogen oxide store of the NOₓ storage catalytic converter means (7), a predefined amount of an exhaust gas flow (16), produced by substoichiometric rich operation of the internal combustion engine (2), for production of a reducing agent, in particular for producing ammonia, flows via the NOₓ storage catalytic converter means (7) to the SCR catalytic converter means (9), in which the produced reducing agent, in particular ammonia, can be stored.

2. Device according to claim 1, **characterised in that** a first partial exhaust gas line (6), assigned to a first group (3) of cylinders of the internal combustion engine (2), and a second partial exhaust gas line (8), assigned to a second group (4) of cylinders of the internal combustion engine (2), are provided, and **in that** an NOₓ storage catalytic converter means (7) is arranged in the first partial exhaust gas line (6) forming an NSC partial exhaust gas line, and an SCR catalytic converter means (9) is arranged in the second partial exhaust gas line (8) forming an SCR partial exhaust gas line.

3. Device according to claim 2, **characterised in that** a flow guide device (11, 12; 18) is provided which can be triggered by means of a control device and which, in the case of a nitrogen oxide store of the NOₓ storage catalytic converter means (7) filled by lean operation of the internal combustion engine (2), releases a flow connection provided upstream from the SCR catalytic converter means (9) and downstream from the NOₓ storage catalytic converter means (7) between the NSC and the SCR partial exhaust gas line (6, 8) such that, in the case of simultaneous substoichiometric rich operation of the first group (3) of cylinders, assigned to the NSC partial exhaust gas line (6), a predefined amount (16) of the exhaust gas formed therein flows, with reduction agent formation, with the nitrogen oxide of the NOₓ storage catalytic converter means (7) to the SCR catalytic converter means (9) for storage of the reducing agent formed, in particular of ammonia, in the SCR catalytic converter means (9).

4. Device according to claim 3, **characterised in that**, during substoichiometric rich operation of the first group (3) of cylinders, the flow guide device (11, 12; 18) blocks the NOₓ partial exhaust gas line (6) upstream from the flow connection (10) to the SCR partial exhaust gas line (8) such that the entire amount of exhaust gas (16) formed in the first group of cylinders overflows into the SCR partial exhaust gas line (8) via the flow connection (10).

5. Device according to either claim 3 or claim 4, **characterised in that** the second group (4) of cylinders, assigned to the SCR partial exhaust gas line (8), can be operated in lean operation during substoichiometric rich operation of the first cylinder group (3), assigned to the NSC partial exhaust gas line (6).

6. Device according to any of claims 3 to 5, **characterised in that**, during lean operation of the first cylinder group (3), in particular during lean operation of the internal combustion engine (2), the flow guide device (11, 12; 18) blocks the flow connection (10) between the NOₓ partial exhaust gas line (6) and the SCR partial exhaust gas line (8) and releases the flow in the NSC partial exhaust gas line (6) and in the SCR partial exhaust gas line (8).

7. Device according to any of claims 1 to 6, **characterised in that** the flow connection (11, 12; 18) is formed by an overflow pipe (10), in particular an intermediate cross connection, which discharges upstream from the SCR catalytic converter means (9) into the SCR partial exhaust gas line (8) and downstream from the NOₓ storage catalytic converter means (7) into the NOₓ partial exhaust gas line (6).

8. Device according to any of claims 1 to 7, **characterised in that** the flow guide device is formed by an exhaust gas flap arrangement (11, 12) and/or a valve arrangement (18).

9. Device according to claim 7 and claim 8, **characterised in that** the flow guide device is formed by an exhaust gas flap arrangement comprising two exhaust gas flaps (11, 12) which can be triggered by means of the control device according to predefined control parameters, of which the first exhaust gas flap (11) releases or closes the overflow pipe (10), while a second exhaust gas flap (12) is located downstream from the overflow pipe (10) in the NSC partial exhaust gas line (6) and releases or closes it.

10. Device according to claim 7 and claim 8, **characterised in that** the flow guide device is formed by a directional control valve (18), in particular a 2-way valve, which is arranged in the outlet region (17) of the overflow pipe (10) in the NOₓ partial exhaust gas line (6) and which in a first switching position blocks the flow connection to the overflow pipe (10) with simultaneous release of the flow in the NSC partial exhaust gas line (6), or which in a second switching position releases the flow connection to the overflow pipe (10) with simultaneous blocking of the continuing flow in the SCR partial exhaust gas line (8).

11. Device according to any of claims 2 to 10, **characterised in that** the first cylinder group is formed by a first cylinder bank (3) and the second cylinder group is formed by a second cylinder bank (4) of the internal combustion engine (2), in particular a V-type internal combustion engine.

12. Device according to any of claims 1 to 11, **characterised in that** the NOₓ storage catalytic converter means (7) is formed by at least one NOₓ storage catalytic converter, optionally in combination with a particle filter.

13. Device according to any of claims 1 to 12, **characterised in that** the SCR catalytic converter means (9) is formed by at least one SCR catalytic converter, in particular a zeolite-based SCR catalytic converter, optionally in combination with a particle filter.

14. Device according to any of claims 1 to 13, **characterised in that** downstream from the NOₓ storage catalytic converter means (7) and/or downstream from the SCR catalytic converter means (9) a sensor means (13) is provided, by means of which predefined exhaust gas parameters, in particular a pollutant concentration, can be detected in the exhaust gas such that depending on the detected parameters, in particular by comparison with predefined threshold values, it is possible to switch between the individual operating modes of the internal combustion engine (2), in particular to switch operating types for predefined cylinder groups or cylinder banks (3).

15. Method for purifying exhaust gases for an internal combustion engine, comprising a multi-flow exhaust gas line which has a plurality of partial exhaust gas lines and in which an NOₓ storage catalytic converter means and an SCR catalytic converter means are arranged, **characterised in that** the NOₓ storage catalytic converter means (7) and the SCR catalytic converter means (9) are distributed on different partial exhaust gas lines (6, 8) such that, in the case of a nitrogen-oxide-filled nitrogen oxide store of the NOₓ storage catalytic converter means (7), a predefined amount of the exhaust gas flow (16), produced by substoichiometric rich operation of the internal combustion engine (2), for production of a reducing agent, in particular for producing ammonia, flows via the NOₓ storage catalytic converter means (7) to the SCR catalytic converter means (9), in which the produced reducing agent, in particular ammonia, can be stored.

16. Method according to claim 15, **characterised in that** a first partial exhaust gas line (6), assigned to a first group (3) of cylinders of the internal combustion engine (2), and a second partial exhaust gas line (8), assigned to a second group (4) of cylinders of the internal combustion engine (2), are provided, and **in that** an NOₓ storage catalytic converter means (7) is arranged in the first partial exhaust gas line (6) forming an NOₓ partial exhaust gas line, and an SCR catalytic converter means (9) is arranged in the second partial exhaust gas line (8) forming an SCR partial exhaust gas line.

17. Method according to claim 16, **characterised in that** a flow guide device (11, 12; 18) is provided which can be triggered by means of a control device and which, in the case of a nitrogen oxide store of the NOₓ storage catalytic converter means (7) filled by lean operation of the internal combustion engine (12), releases a flow connection provided upstream from the SCR catalytic converter means (9) and downstream from the NOₓ storage catalytic converter means (7) between the NOₓ and the SCR partial exhaust gas line (6, 8) such that, in the case of simultaneous substoichiometric rich operation of the first group (3) of cylinders, assigned to the NSC partial exhaust gas line (6), a predefined amount (16) of the exhaust gas formed therein flows, with reduction agent formation, with the released nitrogen oxide of the NOₓ storage catalytic converter means (7) to the SCR catalytic converter means (9), in which the reducing agent produced, in particular ammonia, is stored.

18. Method according to claim 17, **characterised in that**, during substoichiometric rich operation of the first group (3) of cylinders, the flow guide device (11, 12; 18) blocks the NSC partial exhaust gas line (6) downstream from the flow connection (10) to the SCR partial exhaust gas line (8) such that the entire amount of exhaust gas (16) formed in the first group of cylinders overflows into the SCR partial exhaust gas line (8) via the flow connection (10).

19. Method according to either claim 17 or claim 18, **characterised in that** the second group (4) of cylinders, assigned to the SCR partial exhaust gas line (8), is operated in lean operation during substoichiometric rich operation of the first cylinder group (3), assigned to the NOₓ partial exhaust gas line (6).

20. Method according to any of claims 17 to 19, **characterised in that**, during lean operation of the first cylinder group (3), in particular during lean operation of the internal combustion engine (2), the flow guide device (11, 12; 18) blocks the flow connection (10) between the NSC partial exhaust gas line (6) and the SCR partial exhaust gas line (8) and releases the flow in the NSC partial exhaust gas line (6) and in the SCR partial exhaust gas line (8).

21. Method according to any of claims 15 to 20, **characterised in that** downstream from the NOₓ storage catalytic converter means (7) and/or downstream from the SCR catalytic converter means (9) a sensor means (13) is provided, by means of which predefined exhaust gas parameters, in particular a pollutant concentration, are detected in the exhaust gas such that depending on the detected parameters, in particular by comparison with predefined threshold values, it is possible to switch between the individual operating modes of the internal combustion engine (2), in particular to switch operating types for predefined cylinder groups or cylinder banks (3).

## Revendications

1. Dispositif d'épuration de gaz d'échappement d'un moteur à combustion interne, comprenant un système de branches de gaz d'échappement à flux multiples présentant plusieurs branches à flux de gaz d'échappement partiels, dans lequel système sont aménagés un dispositif catalytique accumulateur de NOₓ et un dispositif catalytique de SCR,
**caractérisé en ce que**
le dispositif catalytique (7) accumulateur de NOₓ et le dispositif catalytique de SCR (9) sont répartis sur différentes branches (6, 8) à flux de gaz d'échappement partiels (6, 8),
dans un accumulateur de dioxydes d'azote chargé de dioxydes d'azote du dispositif catalytique (7) accumulateur de NOₓ, une quantité prédéterminée d'un flux de gaz d'échappement (16) produite par un mélange riche en hydrocarbure en mode sous-stoechiométrique du moteur à combustion interne (2) pour la production d'agent réducteur, en particulier pour la production d'ammoniac, s'écoule via le dispositif catalytique (7) accumulateur de NOₓ vers le dispositif catalytique de SCR (9), dans lequel l'agent réducteur produit, en particulier l'ammoniac, peut s'accumuler.

2. Dispositif selon la revendication 1, **caractérisé en ce qu'**il est prévu une première branche (6) à flux de gaz d'échappement partiel affectée à un premier groupe (3) de cylindres du moteur à combustion interne (2) et une seconde branche (8) à flux de gaz d'échappement partiel affectée à un second groupe (4) de cylindres du moteur à combustion interne (2), et
**en ce qu'**on agence dans la première branche (6) à flux de gaz d'échappement partiel formant une branche à flux de gaz d'échappement partiel de NSC, un dispositif catalytique (7) accumulateur de NOₓ et, dans la seconde branche (8) à flux de gaz d'échappement partiel formant une branche à flux de gaz d'échappement partiel de SCR, un dispositif catalytique (9) accumulateur de SCR.

3. Dispositif selon la revendication 2, **caractérisé en ce qu'**il est prévu un dispositif d'acheminement (11, 12 ; 18) qui peut être commandé au moyen d'un dispositif de commande et qui, dans le cas d'un accumulateur de dioxydes d'azote du dispositif catalytique (7) accumulateur de NOₓ chargé d'un mélange pauvre en hydrocarbure du moteur à combustion interne (2), libère un raccord d'écoulement prévu en aval du dispositif catalytique (7) accumulateur de NOₓ et en amont du dispositif catalytique de SCR (9) entre les branches (6, 8) à flux de gaz d'échappement partiels de NSC et de SCR de sorte que, dans le cas d'un fonctionnement avec un mélange riche en hydrocarbure en mode sous-stoechiométrique simultané du premier groupe (3) de cylindres affecté à la branche (6) à flux de gaz d'échappement partiel de NSC, une quantité de gaz d'échappement prédéterminée (16) des gaz d'échappement ainsi formés s'écoule en formant un agent réducteur avec le dioxyde d'azote du dispositif catalytique (7) accumulateur de NOₓ vers le dispositif catalytique de SCR (9) pour accumuler l'agent de réduction formé, en particulier de l'ammoniac, dans le dispositif catalytique de SCR (9).

4. Dispositif selon la revendication 3, **caractérisé en ce que** le dispositif d'acheminement (11, 12 ; 18) au cours du fonctionnement avec un mélange riche en hydrocarbure en mode sous-stoichiométrique du premier groupe (3) de cylindres bloque la branche (6) de flux de gaz d'échappement partiel de NOₓ en amont du raccord d'écoulement (10) avec la branche (8) de flux de gaz d'échappement partiel de SCR de sorte que la quantité de gaz d'échappement totale (16) formée dans le premier groupe de cylindres déborde dans la branche (8) à flux de gaz d'échappement partiel de SCR via le raccordement d'écoulement (10).

5. Dispositif selon la revendication 3 ou la revendication 4, **caractérisé en ce que** le second groupe (4) de cylindres affecté à la branche (8) à flux de gaz d'échappement partiel de SCR peut être activé au cours du fonctionnement avec un mélange riche en hydrocarbure en mode sous-stoechiométrique du premier groupe (3) de cylindres affecté à la branche (6) à flux de gaz d'échappement partiel de NCR en fonctionnement avec un mélange pauvre en hydrocarbure.

6. Dispositif selon l'une quelconque des revendications 3 à 5, **caractérisé en ce que** le dispositif d'acheminement (11, 12 ; 18) au cours du fonctionnement avec un mélange pauvre en hydrocarbure du premier groupe (3) de cylindres, en particulier au cours du fonctionnement avec un mélange pauvre en hydrocarbure du moteur à combustion interne (2) bloque le raccord d'écoulement (10) entre la branche (6) à flux de gaz d'échappement partiel de NOₓ et la branche (8) à flux de gaz d'échappement partiel de SCR et libère l'écoulement respectif dans la branche (6) à flux de gaz d'échappement partiel de NSC et dans la branche (8) à flux de gaz d'échappement partiel de SCR.

7. Dispositif selon l'une quelconque des revendications 1 à 6, **caractérisé en ce que** le raccord d'écoulement (11, 12 ; 18) est formé par un tube de débordement (10), en particulier un tube de trop-plein, qui débouche en aval du dispositif catalytique (7) accumulateur de NOₓ dans la branche (6) à flux de gaz d'échappement partiel de NOₓ et en amont du dispositif catalytique de SCR (9) dans la branche (8) à flux de gaz d'échappement partiel de SCR.

8. Dispositif selon l'une quelconque des revendications 1 à 7, **caractérisé en ce que** le dispositif d'acheminement est formé par un aménagement (11, 12) de clapets d'échappement et/ou un aménagement de soupapes (18).

9. Dispositif selon la revendication 7 et la revendication 8, **caractérisé en ce que** le dispositif d'acheminement est formé par un aménagement de clapets d'échappement avec deux clapets de gaz d'échappement (11, 12) qui peuvent être commandés au moyen du dispositif de commande en fonction de paramètres de commande prédéterminés, dont l'un, un premier clapet de gaz d'échappement (11), libère ou ferme le tube de débordement (10), tandis qu'un second clapet de gaz d'échappement (12) est aménagé en aval du tube de débordement (10) dans la branche (6) à flux de gaz d'échappement partiel de NSC et libère ou ferme celui-ci.

10. Dispositif selon la revendication 7 et la revendication 8, **caractérisé en ce que** le dispositif d'acheminement est formé par une soupape de distribution (18) aménagée dans la branche (6) à flux de gaz d'échappement partiel de NOₓ dans la zone d'embouchure (17) du tube de débordement (10), en particulier une soupape à deux voies, qui, dans une première position de commutation, bloque le raccord d'écoulement allant au tube de débordement (10) lors d'une libération simultanée de l'écoulement dans la branche (6) à flux de gaz d'échappement partiels de NSC ou libère, dans une seconde position de commutation, le raccord d'écoulement avec le tube de débordement (10) lors d'un blocage simultané de l'écoulement dans la branche (8) à flux de gaz d'échappement partiel de SRC.

11. Dispositif selon l'une quelconque des revendications 2 à 10, **caractérisé en ce que** le premier groupe de cylindres est formé par un premier bloc de cylindres (3) et le second groupe de cylindres par un second bloc de cylindres du moteur à combustion interne (2), en particulier d'un moteur à combustion interne à structure en V.

12. Dispositif selon l'une quelconque des revendications 1 à 11, **caractérisé en ce que** le dispositif catalytique (7) accumulateur de NOₓ est formé par au moins un catalyseur accumulateur de NOₓ éventuellement en combinaison avec un filtre à particules.

13. Dispositif selon l'une quelconque des revendications 1 à 10, **caractérisé en ce que** le dispositif catalytique de SCR (9) est formé par au moins un catalyseur de SCR, en particulier un catalyseur de SCR à base de zéolite, éventuellement en combinaison avec un filtre à particules.

14. Dispositif selon l'une quelconque des revendications 1 à 13, **caractérisé en ce qu'**il est prévu en aval du dispositif catalytique (7) accumulateur de NOₓ et/ou en aval du dispositif catalytique de SCR (9) un dispositif capteur (13) au moyen duquel ou desquels on peut détecter des paramètres de gaz d'échappement prédéterminés, en particulier une concentration en substances nocives de sorte que l'on puisse réaliser, en fonction des paramètres détectés, en particulier en comparaison de valeurs de seuil prédéterminées, une commutation entre les modes de fonctionnement individuels du moteur à combustion interne (2), en particulier une commutation de modes de fonctionnement pour des groupes ou des blocs (3) de cylindres prédéterminés.

15. Procédé d'épuration de gaz d'échappement pour un moteur à combustion interne, comprenant un système de branches de gaz d'échappement à plusieurs flux présentant plusieurs branches de gaz d'échappement à flux partiels, dans lequel un dispositif catalytique accumulateur de NOₓ et un dispositif catalytique de SCR sont agencés,
**caractérisé en ce que**
Le dispositif catalytique (7) accumulateur de NOₓ et le dispositif catalytique de SCR sont distribués sur différentes branches (6, 8) à flux de gaz d'échappement partiels, de sorte que, dans un accumulateur de dioxydes d'azote du dispositif catalytique accumulateur de NOₓ (7) chargé de dioxydes d'azote, une quantité prédéterminée d'un courant de gaz d'échappement (16) produit par un mélange riche en hydrocarbure en mode sous-stoechiométrique du moteur à combustion interne (2) pour produire un milieu de réduction, en particulier pour la production d'ammoniac, s'écoule via le dispositif catalytique (7) accumulateur de NOₓ vers le dispositif catalytique de SCR (9), dans lequel l'agent réducteur produit, en particulier l'ammoniac, est accumulé.

16. Procédé selon la revendication 15, **caractérisé en ce que** :
il est prévu une première branche (6) à flux de gaz d'échappement partiel affectée au premier groupe (3) de cylindres du moteur à combustion interne (2) et une seconde branche (8) à flux de gaz d'échappement partiel affectée à un second groupe (4) de cylindres du moteur à combustion interne (2), et
on agence, dans la première branche (6) à flux de gaz d'échappement partiel formant une branche à flux de gaz d'échappement partiel de NOₓ, un dispositif catalytique (7) accumulateur de NOₓ et dans la seconde branche (8) à flux de gaz d'échappement partiel formant une branche à flux de gaz d'échappement partiel de SCR, un dispositif catalytique (9) accumulateur de SCR.

17. Procédé selon la revendication 16, **caractérisé en ce qu'**il est prévu un dispositif d'acheminement (11, 12 ; 18) qui peut être commandé au moyen d'un dispositif de commande et qui, dans le cas d'un accumulateur de dioxydes d'azote du dispositif catalytique (7) accumulateur de NOₓ chargé par un mélange pauvre en hydrocarbure du moteur à combustion interne (12) libère un raccord d'écoulement prévu en aval du dispositif catalytique (7) accumulateur de NOₓ et en amont du dispositif catalytique de SCR (9) entre les branches (6, 8) à flux de gaz d'échappement partiels de NOₓ et de SCR de sorte que, lors d'un fonctionnement avec un mélange riche en hydrocarbure en mode sous-stoichiométrique simultané du premier groupe (3) de cylindres affecté à la branche (6) à flux de gaz d'échappement partiel de NSC, une quantité (16) de gaz d'échappement prédéterminée des gaz d'échappement qui y sont formés par formation d'agent de réduction avec le dioxyde d'azote libéré du dispositif catalytique (7) accumulateur de NOₓ s'écoule vers le dispositif catalytique de SCR (9), dans lequel le milieu réducteur produit, en particulier l'ammoniac, est accumulé.

18. Procédé selon la revendication 17, **caractérisé en ce que** le dispositif d'acheminement (11, 12 ; 18) bloque au cours du fonctionnement avec un mélange riche en hydrocarbure en mode sous-stoechiométrique du premier groupe (3) de cylindres la branche (6) à flux de gaz d'échappement partiel de NSC en aval du raccord d'écoulement (10) vers la branche (8) à flux de gaz d'échappement partiel de SCR de sorte que la quantité de gaz d'échappement totale (16) formée dans le premier groupe de cylindres déborde via le raccord d'écoulement (10) dans la branche (8) à flux de gaz d'échappement partiel du SCR.

19. Procédé selon la revendication 17 ou la revendication 18, **caractérisé en ce que** le second groupe (4) de cylindres affecté à la branche (8) à flux de gaz d'échappement partiel de SCR est commandé au cours du fonctionnement avec un mélange riche en hydrocarbure en mode sous-stoechiométrique du premier groupe de cylindres (3) affecté à la branche (6) à flux de gaz d'échappement partiels de NOₓ en fonctionnement avec un mélange pauvre en hydrocarbure.

20. Procédé selon l'une quelconque des revendications 17 à 19, **caractérisé en ce que** le dispositif d'acheminement (11, 12 ; 18) bloque au cours du fonctionnement avec un mélange pauvre en hydrocarbure du premier groupe de cylindres (3), en particulier au cours du fonctionnement avec un mélange pauvre en hydrocarbure du moteur à combustion interne (2) le raccord d'écoulement (10) entre la branche (6) à flux de gaz d'échappement partiel de NSC et la branche (8) à flux de gaz d'échappement partiel de SCR et libère l'écoulement respectivement dans la branche (6) à flux de gaz d'échappement partiel de NSC et dans la branche (8) à flux de gaz d'échappement partiel de SCR.

21. Procédé selon l'une quelconque des revendications 15 à 20, **caractérisé en ce qu'**il est prévu en aval du dispositif catalytique (7) accumulateur de NOₓ et/ou en aval du dispositif catalytique de SCR (9) un dispositif à capteurs (13) au moyen duquel ou desquels des paramètres de gaz d'échappement prédéterminés, en particulier une concentration en produits nocifs, sont détectés dans les gaz d'échappement de sorte que l'on puisse réaliser, en fonction des paramètres détectés, en particulier en comparaison de valeurs de seuil prédéterminées, une commutation entre les modes de fonctionnement individuels du moteur à combustion interne (2), en particulier une commutation des modes de fonctionnement pour des groupes de cylindres ou des blocs de cylindres (3) prédéterminés.
